Europäisches Patentamt

European Patent Office

Office européen des brevets

(11) Veröffentlichungsnummer : **0 068 470**
B1

# EUROPÄISCHE PATENTSCHRIFT

(45) Veröffentlichungstag der Patentschrift :
07.05.86

(21) Anmeldenummer : 82105658.7

(22) Anmeldetag : 25.06.82

(51) Int. Cl.⁴ : **E 04 D   3/35**, E 04 B   7/02,
F 24 J   2/00

(54) **Dach aus vorgefertigten Betonplatten.**

(30) Priorität : 25.06.81 DE 3124992
23.03.82 DE 3210607

(43) Veröffentlichungstag der Anmeldung :
05.01.83 Patentblatt 83/01

(45) Bekanntmachung des Hinweises auf die Patenterteilung : 07.05.86 Patentblatt 86/19

(84) Benannte Vertragsstaaten :
AT BE CH FR GB IT LI NL SE

(56) Entgegenhaltungen :
DE-A- 1 459 971
DE-A- 1 609 523
DE-A- 2 616 589
DE-A- 2 630 598
DE-A- 2 643 358
DE-A- 2 722 206
DE-A- 2 922 673
FR-A- 2 478 706
GB-A-   131 225
NL-C-    51 343
US-A- 4 047 357

(73) Patentinhaber : **Carl, Heinz, Ing.grad.**
**Waldstrasse 16**
**D-8644 Pressig (DE)**

(72) Erfinder : **Carl, Heinz, Ing.grad.**
**Waldstrasse 16**
**D-8644 Pressig (DE).**

(74) Vertreter : **Patentanwälte Grünecker, Dr. Kinkeldey,**
**Dr. Stockmair, Dr. Schumann, Jakob, Dr. Bezold,**
**Meister, Hilgers, Dr. Meyer-Plath**
**Maximilianstrasse 58**
**D-8000 München 22 (DE)**

## Beschreibung

Die Erfindung bezieht sich auf ein Dach aus vorgefertigten Betonplatten, bei dem zum Überbrücken der Dachspannweite zwei aneinandergrenzende Betonplatten mit nach außen weisenden Rippen vorgesehen sind, die mit ihren aneinandergrenzenden Seiten freitragend gegeneinander und an ihren jeweils gegenüberliegenden Seiten in einem die Schubkräfte aufnehmenden Widerlager an einer Wand abgestützt sind.

Bei einem aus der DE-A-16 09 523 bekannten Dach dieser Gattung haben die Betonplatten einen im wesentlichen vollen Querschnitt ; ihre an der Außenseite vorgesehenen Rippen verlaufen als verhältnismäßig niedrige Absätze quer über die Plattenbreite und dienen lediglich zum Abstützen eines üblichen Dachbelages, beispielsweise in Form von Dachziegeln. Die Platten mit Vollquerschnitt sind verhältnismäßig schwer, was zu einem großen Aufwand bei der Montage führt. Es sind keinerlei Vorkehrungen für eine Solarheizung getroffen, da die aufgrund der stegförmigen Rippen an der Außenseite vorhandenen, schuppenartigen Ausnehmungen bei weitem nicht genügend Platz für Sonnenenergie-Kollektoren bieten.

Aus der NL-C-51 343 ist ein aus Beton gegossenes Dachbauteil mit Längs- und Querstegen bekannt, die einen offenen Rost bilden. In die Rostöffnungen sind getrennt hergestellte Füllplatten eingelegt. Dieses Dachbauteil ist wegen der Vielteiligkeit nicht nur aufwendig in der Herstellung und Montage ; es ist auch nicht dafür vorgesehen, selbsttragend die ganze Dachhöhe zu überspannen. Für den Einbau von Solarheizungseinrichtungen sind keine Vorkehrungen getroffen.

Grundsätzlich ist es vielfach bekannt, auf der Außenseite von Dachbauteilen Kollektoren für Solarenergie zu montieren.

Der Erfindung liegt die Aufgabe zugrunde, ein Dach der eingangs erläuterten Gattung so auszugestalten, daß es einfach in Aufbau und Montage und zugleich für die Solarbeheizung des zugehörigen Gebäudes geeignet ist.

Diese Aufgabe wird erfindungsgemäß dadurch gelöst, daß die Betonplatten als bewehrte Rippenbetonplatten ausgebildet und mit ihren von den Rippen allseitig eingeschlossenen Vertiefungen nach außen weisend angeordnet sind, und daß in den Vertiefungen zwischen den Rippen solarenergieaufnehmende Einrichtungen angeordnet sind.

Rippenbetonplatten sind an sich bekannt. Sie bestehen aus einem durchgehenden Plattenabschnitt und von diesem einseitig vorstehenden, kassettenförmige Vertiefungen einschließenden, Bewehrungen enthaltenden Rippen. Solche Rippenbetonplatten wurden bislang zum Herstellen von Zwischendecken in Gebäuden verwendet. Dabei wurden die Platten immer so montiert, daß die Rippen und die von ihnen umschlossenen Vertiefungen nach unten weisen.

Der Erfindung liegt der Gedanke zugrunde, daß man eine solche Rippenbetonplatte zum Bilden einer Dachfläche eines Steildaches verwenden kann. Um gleichzeitig eine Solarbeheizung des zugehörigen Gebäudes zu gewährleisten, werden die Rippenbetonplatten aber nicht in üblicher Weise mit ihren Vertiefungen nach unten montiert, sondern in umgedrehter Lage, so daß die Vertiefungen nach außen weisen. In die dadurch ohne zusätzlichen Aufwand entstehenden Aufnahmen werden dann Solarkollektoren eingebaut. Da Rippenbetonplatten im Verhältnis zu ihrer Festigkeit ein vergleichsweise geringes Gewicht aufweisen, entsteht damit ein preiswert herzustellendes und zu montierendes Dach, das zugleich eine Solarbeheizung des Gebäudes ermöglicht.

Zweckmäßigerweise sind die Vertiefungen durch eine wärmedurchlässige Dacheindeckung abgedeckt.

Die Rippenbetonplatten müssen im Firstbereich nicht unbedingt direkt aneinander anliegen ; sie können auch über einen Firstbalken gegeneinander abgestützt sein.

Bei der Verwendung des erfindungsgemäßen Daches für ein Haus mit einem innerhalb von Hohlräumen in der Wand verlegten Heizsystem können auf einfachste Weise die notwendigen Verbindungen hergestellt werden.

Ein Ausführungsbeispiel der Erfindung wird nachstehend anhand der Zeichnung näher erläutert. Es zeigt :

Figur 1 ein erfindungsgemäßes Dach aus Rippenbetonplatten, und

Figur 2 eine Draufsicht auf eine der verwendeten Rippenbetonplatten.

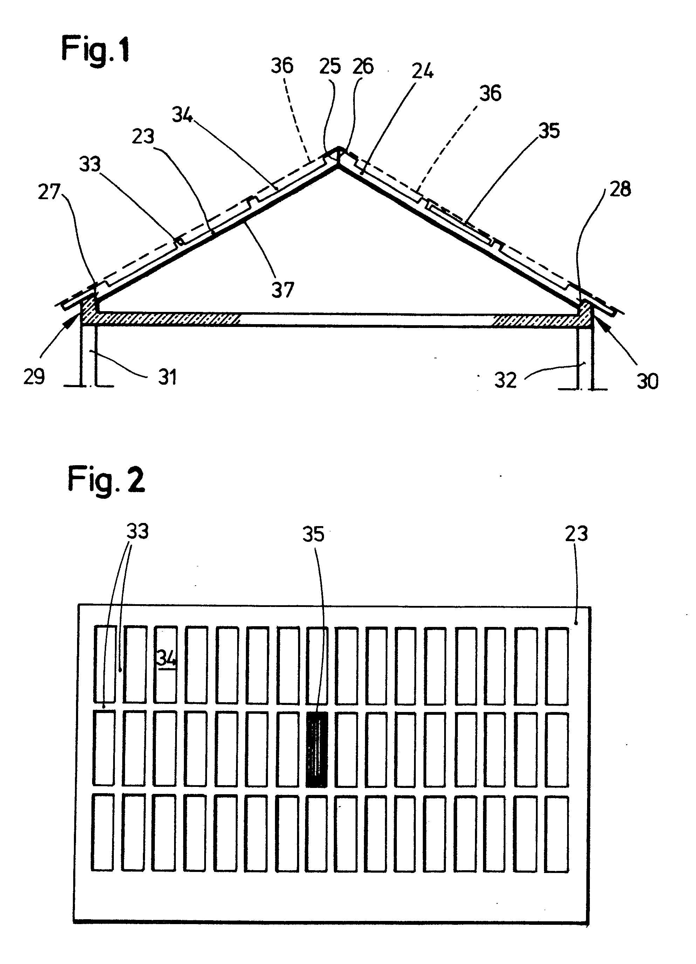

Aus Fig. 1 ist ein Steildach ersichtlich, das im Querschnitt aus zwei Rippenbetonplatten 23, 24 besteht. Die Rippenbetonplatten 23, 24 stützen sich mit ihren aneinandergrenzenden Seiten 25, 26 direkt gegeneinander und mit den gegenüberliegenden Seiten 27, 28 gegen Schubkräfte aufnehmende Widerlager 29, 30 an den Außenwänden 31, 32 ab. Die Rippenbetonplatten 23 und 24 sind so verlegt, daß ihre Rippen 33 nach außen weisen. Die Rippen 33 schließen zwischen sich Vertiefungen bzw. Aussparungen 34 ein, die dadurch naturgemäß nach außen offen sind.

Wie Fig. 2 deutlicher zeigt, werden in die Vertiefungen 34 solarenergieaufnehmende Einrichtungen 35, beispielsweise handelsübliche Sonnenkollektorplatten, eingelegt, wobei die Vertiefungen 34 zweckmäßigerweise bei der Herstellung schon so bemessen wurden, daß sie den Abmessungen der verwendeten Sonnenkollektorplatten entsprechen. Die Anzahl der solarenergieaufnehmenden Einrichtungen 35 richtet sich nach dem Bedarf, obwohl in den Figuren aus Gründen der Übersichtlichkeit nur eine eingezeichnet ist. Die solarenergieaufnehmenden Einrichtungen 35 werden untereinander und mit den anderen zur Sonnenheizung gehörenden Einrichtungen, beispielsweise Wärmespeicher bzw. Wärmetauscher, verbunden. Das Dach wird mit einer Dacheindeckung 36 versehen, die zumindest über den mit Sonnenkollektorplatten 33 versehenen Vertiefungen 34 für die Wärmestrahlung der Sonne durchlässig ist. Die Innenseite des Daches wird mit einer Isolierschicht 37 aus herkömmlichen Wärmedämmstoffen isoliert.

Die Erfindung ist nicht auf das beschriebene und gezeichnete Ausführungsbeispiel beschränkt. So können die Platten 23, 24 anstatt direkt auch über einen Firstbalken gegeneinander abgestützt sein. Ferner können die Rippenbetonplatten mit angeformten Erhebungen ausgestattet sein, so daß das Dach mit einer normalerweise nur auf Lattung zu verlegenden Eindeckung versehen werden kann. Besonders einfach wird die Verbindung der solarenergieaufnehmenden Einrichtung mit dem Heizsystem des Hauses, wenn dieses in Hohlräumen in den Wänden verlegt ist, da dadurch keinerlei zusätzlicher Verrohrungsaufwand erforderlich ist.

**Patentansprüche**

1. Dach aus vorgefertigten Betonplatten, bei dem zum Überbrücken der Dachspannweite zwei aneinandergrenzende Betonplatten (23, 24) mit nach außen weisenden Rippen (33) vorgesehen sind, die mit ihren aneinandergrenzenden Seiten (25, 26) freitragend gegeneinander und an ihren jeweils gegenüberliegenden Seiten (27, 28) in einem die Schubkräfte aufnehmenden Widerlager (29, 30) an einer Wand (31, 32) abgestützt sind, dadurch gekennzeichnet, daß die Betonplatten als bewehrte Rippenbetonplatten (23, 24) ausgebildet und mit ihren von den Rippen (33) allseitig eingeschlossenen Vertiefungen (34) nach außen weisend angeordnet sind, und daß in der Vertiefungen (34) zwischen den Rippen (33) solarenergieaufnehmende Einrichtungen (35) angeordnet sind.

2. Dach nach Anspruch 1, dadurch gekennzeichnet, daß die Vertiefungen (34) durch eine wärmedurchlässige Dacheindeckung (36) abgedeckt sind.

3. Dach nach einem der Ansprüche 1 und 2, dadurch gekennzeichnet, daß die aneinandergrenzenden Seiten (25, 26) über einen Firstbalken (7) gegeneinander abgestützt sind.

4. Dach nach einem der Ansprüche 1 bis 3, dadurch gekennzeichnet, daß die solarenergieaufnehmenden Einrichtungen (35) mit einem innerhalb der Hohlräume der Wände angeordneten Heizsystem verbunden sind.

**Claims**

1. A roof made of prefabricated concrete slabs, in which for bridging the roof span there are provided two mutually bordering concrete slabs (23, 24) having outwards facing ribs (33) and supported along their mutually bordering sides (25, 26) in self-supporting abutment, and at their respective opposite sides (27, 28), in a thrust-absorbing counterbearing (29, 30) on a wall (31, 32), characterized in that said concrete slabs are designed as reinforced ribbed concrete slabs (23, 24) and disposed with their depressions (34) formed by surrounding ribs (33) facing outwards, and that in the depressions (34) between the ribs (33) there are disposed solar energy absorbing devices (35).

2. A roof according to claim 1, characterized in that said depressions (34) are covered by a heat-transmitting roof covering (36).

3. A roof according to one of claims 1 and 2, characterized in that the mutually bordering sides (25, 26) are in supporting abutment with one another through a ridge beam (7).

4. A roof according to any of claims 1 to 3, characterized in that the solar energy absorbing devices (35) are connected to a heating system disposed within the cavities of the walls.

**Revendications**

1. Toit en dalles de béton préfabriquées qui prévoit pour enjamber la portée du toit, deux dalles de béton (23, 24) jointives présentant des nervures (33) tournées vers l'extérieur, lesquelles s'appuient l'une contre l'autre, en appui libre, par leurs côtés jointifs (25, 26) et, par leurs côtés opposés (27, 28) contre un mur (31, 32) par une culée (29, 30) absorbant les efforts tranchants, caractérisé en ce que les dalles de béton sont conformées en dalles de béton nervurées et armées (23, 24) dont les creux (34), délimités de tous côtés par les nervures (33), sont dirigés vers l'extérieur, et en ce que des dispositifs de captage de l'énergie solaire (35) sont montés dans les creux (34) entre les nervures (33).

2. Toit selon la revendication 1, caractérisé en ce que les creux (34) sont recouverts par une couverture de toit (36) diathermane.

3. Toit selon l'une des revendications 1 ou 2, caractérisé en ce que les côtés jointifs (25, 26) s'appuient contre une poutre de faîtage (7).

4. Toit selon l'une quelconque des revendications précédentes, caractérisé en ce que les dispositifs de captage de l'énergie solaire (35) sont raccordés à un système de chauffage monté à l'intérieur des cavités des murs.

**Fig.1**

**Fig. 2**

1